(19) Europäisches Patentamt
European Patent Office
Office européen des brevets

(11) **EP 4 712 292 A1**

(12) **EUROPEAN PATENT APPLICATION**
published in accordance with Art. 153(4) EPC

(43) Date of publication:
**18.03.2026 Bulletin 2026/12**

(21) Application number: **25783101.6**

(22) Date of filing: **06.02.2025**

(51) International Patent Classification (IPC):
**H02J 3/32** (2026.01)    **H02J 7/00** (2026.01)
**G06Q 50/06** (2024.01)

(52) Cooperative Patent Classification (CPC):
**G06Q 50/06; H02J 3/32; H02J 7/00**

(86) International application number:
**PCT/KR2025/099273**

(87) International publication number:
**WO 2025/211925 (09.10.2025 Gazette 2025/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.04.2024 KR 20240046636**

(71) Applicant: **LG Energy Solution, Ltd.
Seoul 07335 (KR)**

(72) Inventor: **KIM, Daesoo
Daejeon 34122 (KR)**

(74) Representative: **BCKIP Part mbB
MK1
Landsbergerstraße 98, 3.Stock
80339 München (DE)**

(54) **OPERATION SUPPORT APPARATUS AND METHOD FOR ENERGY STORAGE SYSTEM**

(57)    An operation support apparatus, according to an embodiment of the present invention, is an operation support apparatus for an energy storage system and may comprise at least one processor, and a memory storing at least one instruction that is executed by the at least one processor. The at least one instruction may include the instructions of: collecting information about batteries that can be applied to the energy storage system; deriving, on the basis of the structure of the energy storage system, a plurality of combinations, each including one or more batteries that can be applied to the energy storage system; calculating an operating cost of the energy storage system for each of the combinations; and generating recommended combination information including information about a combination that, among the combinations, represents the minimum operating cost.

[Figure 3]

**EP 4 712 292 A1**

**Description**

[Technical Field]

This application claims priority to and the benefit of Korean Patent Application No.10-2024-0046636 filed in the Korean Intellectual Property Office on April 5, 2024 the entire contents of which are incorporated herein by reference.
The present invention relates to an apparatus and method for controlling operation of an energy storage system, and more particularly, to an apparatus and method for controlling operation of energy storage system that provides support of minimizing operation cost of the energy storage system.

[Background Art]

Energy storage systems (ESS) are used in the form that batteries which stores energy are operated in conjunction with renewable energy and power grids. Recently, as smart grids and renewable energy are being widely distributed and the efficiency and stability of power grids are being emphasized, the demand for energy storage systems is increasing for power supply and demand control and power quality improvement. Depending on the purpose of use, energy storage systems may have different outputs and capacities and multiple battery systems may be connected to each other to form a large-capacity energy storage system.
Among ESSs, the distribution of ESSs linked to PV (photovoltaic solar power generation) systems is expanding. PV-linked ESSs are configured to appropriately distribute power supplied from the power grid and power produced by PV systems, to supply the power to loads, and to store remaining power in battery systems.
The most important goal that users of ESS consider is to minimize the operation cost of ESS. The costs borne users incurred during the operation of the energy storage system includes a purchase cost of grid power that must be paid at regular intervals and a battery replacement cost incurred at each battery replacement period. In general, an energy storage system is controlled by considering various factors such as power generation of the PV system, power demand of the load, and state of charge of the battery. However, conventional technologies focus on a control method of ESS to improve power efficiency or battery performance, and have limitations in minimizing user costs from the perspective of long-term operation of ESS.
As a technology to solve these problems, appropriate technologies to control energy storage system operation are needed to help minimize long-term operation costs of energy storage systems.
Among the prior art documents relevant to the present invention, KR 10-1380530 is of some relevance.

[Detailed Description of the Invention]

[Technical Problem]

To obviate one or more problems of the related art, embodiments of the present disclosure provide an operation control apparatus of an energy storage system that supports minimizing operation cost of the energy storage system.
To obviate one or more problems of the related art, embodiments of the present disclosure also provide a method for controlling operation of an energy storage system by the operation control apparatus.

[Technical Solution]

In order to achieve the objective of the present disclosure, an apparatus for controlling operation of an energy storage system according to embodiments of the present invention may include at least one processor and a memory that stores at least one instruction executed through the processor.
Here, the at least one instruction may include an instruction to collect information on a battery applicable to the energy storage system; an instruction to derive a plurality of combinations composed of one or more batteries applicable to the energy storage system based on the structure of the energy storage system; an instruction to calculate an operation cost of the energy storage system for each of the combinations; and an instruction to generate information on recommended combination including information on a combination that presents the lowest operation cost among the combinations.
The instruction to collect information on the battery applicable to the energy storage system may include an instruction to collect one or more of a model name, a capacity, a threshold SOC range, and a purchase cost for each battery.
The instruction to derive a plurality of combinations may include an instruction to derive a plurality of combinations applicable to the energy storage system, based on the capacity of each battery and the design structure of the energy storage system.
The instruction to calculate the operation cost of the energy storage system may include an instruction to calculate a grid power purchase cost and a battery purchase cost for each of the combinations; and an instruction to calculate the operation cost based on the grid power purchase cost and the battery purchase cost.

The instruction to calculate the operation cost of the energy storage system may include an instruction to calculate the grid power purchase cost for each of the combinations for a predetermined period of time based on past history information about one or more of the energy storage system, a load connected to the energy storage system, and a power generation device connected to the energy storage system, and charge/discharge schedule information of a bidirectional electric vehicle (EV) charger linked to the energy storage system.

The instruction to calculate the grid power purchase cost may include an instruction to derive an operation schedule including a charge/discharge amount for each time period that minimizes the grid power purchase cost by using an objective function defined to represent the grid power purchase cost; and an instruction to calculate a grid power purchase cost for each of the combinations for a predetermined period of time by applying the operation schedule and grid power cost information to the energy storage system according to each of the combinations.

The objective function may be defined with one or more constraints which includes at least one of: a first condition regarding balance of power supply and power consumption; a second condition regarding state of charge (SOC) according to charge/discharging efficiency of an ESS battery; a third condition regarding a charge amount limit of the ESS battery; a fourth condition regarding an output limit of an inverter; a fifth condition regarding binarization of charge/discharge state of the ESS battery; a sixth condition regarding state of charge (SOC) according to charge/discharging efficiency of an EV battery; a seventh condition regarding a charge amount limit of the EV battery; an eighth condition regarding an output limit of a bidirectional EV charger; and a ninth condition regarding binarization of the charge/discharge state of the bidirectional EV charger.

The at least one instruction may further include an instruction to provide the generated recommended combination information to a user terminal linked with the energy storage system.

The recommended combination information may include one or more of a model name of the battery, a capacity of the battery, a number of batteries and a connection structure of the batteries applied to the energy storage system.

According to another embodiment of the present disclosure, a method of controlling operation of an energy storage system (ESS) may include collecting information on a battery applicable to the energy storage system; deriving a plurality of combinations composed of one or more batteries applicable to the energy storage system based on the structure of the energy storage system; calculating an operation cost of the energy storage system for each of the combinations; and generating information on recommended combination including information on a combination that presents the lowest operation cost among the combinations.

The collecting information on a battery applicable to the energy storage system may include collecting one or more of a model name, a capacity, a threshold SOC range, and a purchase cost for each battery.

The deriving the plurality of combinations may include deriving a plurality of combinations applicable to the energy storage system, based on the capacity of each battery and the design structure of the energy storage system.

The calculating the operation cost of the energy storage system may include calculating a grid power purchase cost and a battery purchase cost for each of the combinations; and calculating the operation cost based on the grid power purchase cost and the battery purchase cost.

The calculating the operation cost of the energy storage system may include calculating the grid power purchase cost for each of the combinations for a predetermined period of time based on past history information about one or more of the energy storage system, a load connected to the energy storage system, and a power generation device connected to the energy storage system, and charge/discharge schedule information of a bidirectional electric vehicle (EV) charger linked to the energy storage system.

The calculating the grid power purchase cost may include deriving an operation schedule including a charge/discharge amount for each time period that minimizes the grid power purchase cost by using an objective function defined to represent the grid power purchase cost; and calculating a grid power purchase cost for each of the combinations for a predetermined period of time by applying the operation schedule and grid power cost information to the energy storage system according to each of the combinations.

The objective function is defined with one or more constraints which includes at least one of: a first condition regarding balance of power supply and power consumption; a second condition regarding state of charge (SOC) according to charge/discharging efficiency of an ESS battery; a third condition regarding a charge amount limit of the ESS battery; a fourth condition regarding an output limit of an inverter; a fifth condition regarding binarization of charge/discharge state of the ESS battery; a sixth condition regarding state of charge (SOC) according to charge/discharging efficiency of an EV battery; a seventh condition regarding a charge amount limit of the EV battery; an eighth condition regarding an output limit of a bidirectional EV charger; and a ninth condition regarding binarization of the charge/discharge state of the bidirectional EV charger.

The method may further include providing the generated recommended combination information to a user terminal linked with the energy storage system.

The recommended combination information may include one or more of a model name of the battery, a capacity of the battery, a number of batteries and a connection structure of the batteries applied to the energy storage system.

[Advantageous Effects]

According to embodiments of the present disclosure, it is possible to minimize the burden of user costs incurred during long-term operation of an energy storage system.

[Brief Description of the Drawings]

FIG. 1 is a block diagram of an energy storage system to which the present invention may be applied.
FIG. 2 shows an example of an implementation of an energy storage system to which the present invention may be applied.
FIG. 3 is a flowchart of an operation control method of an energy storage system according to embodiments of the present invention.
FIG. 4 is a reference table for explaining battery information according to embodiments of the present invention.
FIG. 5 is a reference table for explaining a method for deriving battery combinations according to embodiments of the present invention.
FIG. 6 is a reference table for explaining a method of deriving an optimal combination according to embodiments of the present invention.
FIG. 7 is an example screen of a user terminal for explaining charge/discharge schedule information of an EV charger according to embodiments of the present invention.
FIG. 8 is a block diagram of an operation control apparatus of an energy storage system according to embodiments of the present invention.

100: energy storage system
200: load
300: EV charger
400: power generation device
500: operation control apparatus
600: user terminal

[Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.
It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.
It will be understood that when an element is referred to as being "coupled" or "connected" to another element, it may be directly coupled or connected to the other element or an intervening element may be present. In contrast, when an element is referred to as being "directly coupled" or "directly connected" to another element, there is no intervening element present.
The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.
Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

State of Charge (SOC) refers to a current state of charge of a battery, represented in percent points [%], and State of Health (SOH) may be a current condition of a battery compared to its ideal or original conditions, represented in percent points [%].

Power Limit refers to a limit of power that can be output from the battery and is set in advance by a battery manufacturer according to the battery condition or set according to the SOC. The power limit may be divided into a charge power limit and a discharge power limit depending on whether it is charging or discharging.

Hereinafter, exemplary embodiments of the present invention will be described in detail with reference to the accompanying drawings.

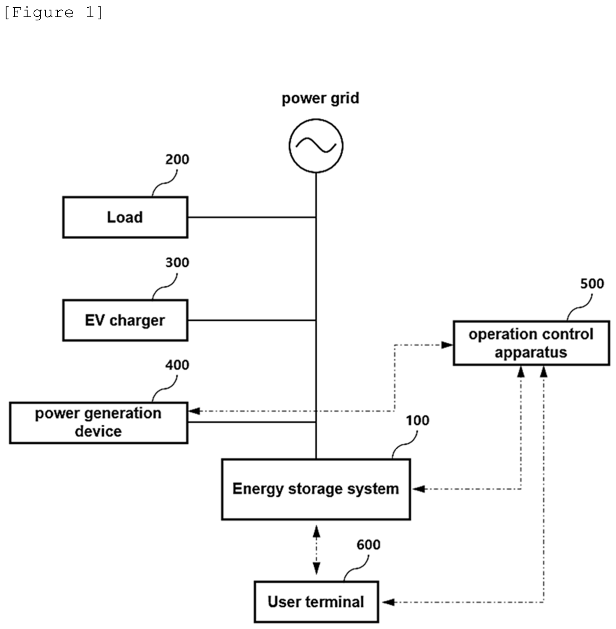

FIG. 1 is a block diagram of an energy storage system to which the present invention may be applied.

The energy storage system 100 is electrically connected to a load 200, an electric vehicle (EV) charger 300, a power generation device 400, and a power grid, and may receive power from the power grid and the power generation device 400 and store it internally.

The energy storage system 100 may be electrically connected to a load 200, and may supply power stored internally to the load 200. Meanwhile, the load 200 may be electrically connected to a bidirectional EV charger 300, a power generation device 400, and a power grid, and may receive power from the bidirectional EV charger 300, the power generation device 400, and the power grid.

The EV charger 300 may be electrically connected to the power grid, the power generation device 400, and the energy storage system 100, and may receive power from the power grid, the power generation device 400, and the energy storage system 100.

In embodiments, the EV charger 300 may correspond to a bidirectional EV charger. Here, the EV charger 300 may charge a battery (hereinafter, EV battery) included in the EV using power supplied from the outside and discharge power stored in the EV battery to the outside. In other words, when the EV is connected to the EV charger 300, the bidirectional EV charger and the EV battery may function in the same way as the energy storage system 100 according to the present invention.

When the EV charger 300 is configured as a bidirectional charger, the EV charger 300 may supply power stored inside to the load 200 and the energy storage system 100.

The power generation device 400 is a device that generates power using a power generator, and may be configured to include at least one of a power generation device using solar photovoltaic energy, solar heat energy, wind power, and geothermal heat. Meanwhile, since the type of the power generation device 400 is not an essential component of the present invention, the scope of the present invention is not limited to these entities.

The energy storage system 100 may be configured to be connected to a user terminal 600 through a network and to transmit and receive data with each other. For example, if the energy storage system 100 is a residential (Home) ESS, the user terminal 600 may be configured to be connected to a Home Energy Management System (HEMS), which is the top-level control system of the residential ESS, through a network and to transmit and receive data with each other.

The user terminal 600 may be a computing device used by an owner or manager of the energy storage system 100, and may correspond to, for example, a personal computer (PC), a mobile phone, or a tablet PC.

The energy storage system 100 may transmit information about one or more of operating status of the energy storage system 100, power generation status of the power generation device 400, operating status of the EV charger 300, and power consumption status of the load 200 to the user terminal 600. Here, the user terminal 600 may output the received information through a predefined Graphical User Interface (GUI).

The user terminal 600 may transmit a selection signal input by the user to the energy storage system 100 and the energy storage system 100 may perform a control operation corresponding to the selection signal. For example, when an off request signal for a specific load is received through the user terminal 600, the EMS of the energy storage system 100 may block power supply to the corresponding load by blocking the electrical path for the load.

The operation control apparatus 500 may be configured to be connected to the energy storage system 100 through a network and to transmit and receive data with each other. In addition, the operation control apparatus 500 may be configured to be connected to at least one of the power generation device 400 and the user terminal 600 through a network and to transmit and receive data with each other.

The operation control apparatus 500 may be configured to be included within the energy storage system 100, or may be separately provided outside the energy storage system 100. For example, the operation control apparatus 500 may be implemented by being included in a HEMS of a residential ESS, or may be implemented by being included in a server of an ESS management company.

The operation control apparatus 500 may collect information on batteries applicable to the energy storage system 100 and generate recommendation information on battery combinations that may minimize operation cost of the energy storage system. Here, the operation control apparatus 500 may provide the generated recommendation information to one or more of the energy storage system 100 and the user terminal 600. Meanwhile, details on a method for generating the recommended combination information will be described later.

The operation control apparatus 500 may establish an operation schedule that can minimize power purchase cost of the energy storage system 100 based on past history information about one or more of the energy storage system 100, the load 200, and the power generation device 400 and the charge/discharge schedule of the EV charger 300. Here, the operation schedule may include charge/discharge amount of the battery for each time period. The operation control apparatus 500 may transmit the established operation schedule to a battery charge/discharge control device of the energy storage system 100 so that the battery of the energy storage system 100 may be charged/discharged according to the operation schedule.

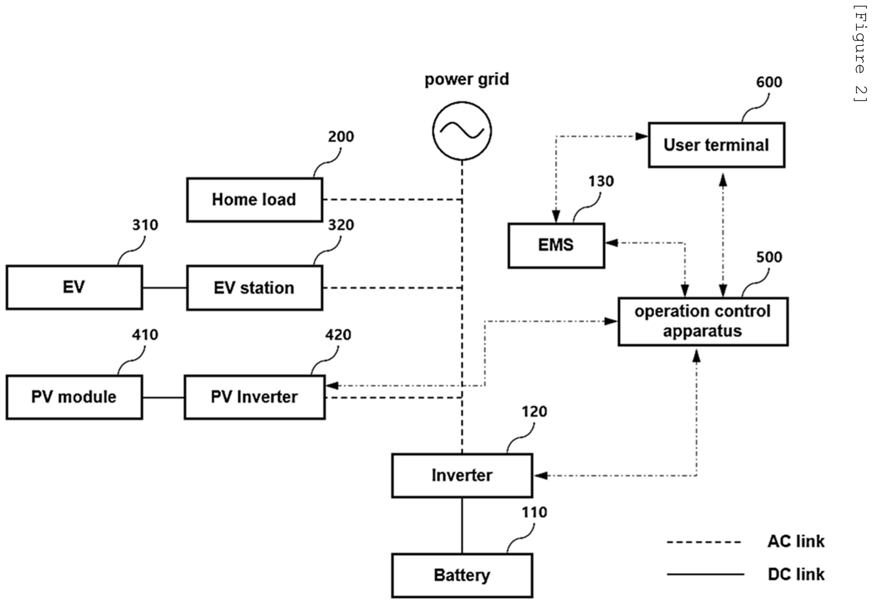

FIG. 2 shows an example of an implementation of an energy storage system to which the present invention may be applied.

Referring to FIG. 2, the energy storage system 100 may be configured to include an ESS battery 110 that stores power, an inverter 120 that controls charging and discharging operation of the ESS battery 110, and an energy management system (EMS) 130 that manages configurations of the energy storage system and power devices linked to the energy storage system in overall.

The ESS battery 110 configured to store power may be typically implemented in a form in which a plurality of battery packs constitute a battery rack, and a plurality of battery racks constitute a battery bank. Here, depending on a device or system in which the battery is used, the battery pack may also be referred to as a battery module.

A battery management system (BMS) may be installed in each ESS battery. The BMS may monitor the current, voltage, and temperature of each battery rack (or pack) it manages, calculate a state of charge (SOC) based on the monitoring results, and control charging and discharging.

The inverter 120 may also be referred to as a power conditioning system (PCS) or a power conversion system (PCS), and may control power supplied to the battery from the outside and power supplied by the battery to the outside.

The inverter 120 may include a power management system (PMS), and the operation control apparatus 500 may be configured to be linked with the power management system of the inverter 120 to transmit and receive data with each other.

The inverter 120 may control charging and discharging operations of the ESS battery 110 according to the operation schedule determined by the operation control apparatus 500. For example, the inverter 120 may receive an operation schedule for a specific day from the operation control apparatus 500 and control charging/discharging operations of the ESS battery 110 according to a reference power for each time period included in the operation schedule.

The EMS 130 may be linked with the load, the power generation device, and the inverter, and may monitor and control the linked components.

The load 200 may be configured to include a plurality of loads. Here, at least some of the loads may be first loads that cannot be on/off controlled and the remaining some may be configured as second loads that may be on/off controlled.

The first load may mean a load of which power cannot be turned off or a load of which supplying power cannot be cut off, by control of the EMS. In addition, the second load may mean a load of which power may be turned off or a load of which supplying power can be cut off, by control of the EMS. Here, the second load may be defined based on a selection signal input by a user.

The bidirectional EV station 320 may control charging and discharging operations of the EV battery included in the EV 310.

The PV system may be configured to include a PV module 410 (e.g., a solar panel) and a PV inverter 420 which is an AC/DC inverter, and an AC terminal of the PV inverter 420 and an AC terminal of the inverter 120 of the energy storage system may be configured to be connected to an AC link.

The energy storage system illustrated in FIG. 2 is an AC coupled ESS in which the PV system, load, and energy storage system are connected on an AC link.

When the energy storage system has an AC coupled structure, the operation control apparatus 500 may collect basic information for generating recommended combination information by linking with one or more of the inverter 120, the PV inverter 420, the EMS 130, and the user terminal 600.

Meanwhile, the present invention may also be applied to a DC coupled ESS in which the output terminal of the PV system and the output terminal of the battery are connected on a DC link, and the DC link is connected to one terminal of the inverter. In the case where the energy storage system has a DC coupled structure, the PV inverter 420 is omitted and the operation control apparatus 500 may collect basic information for generating recommended combination information by linking with one or more of the inverter 120, EMS 130, and user terminal 600.

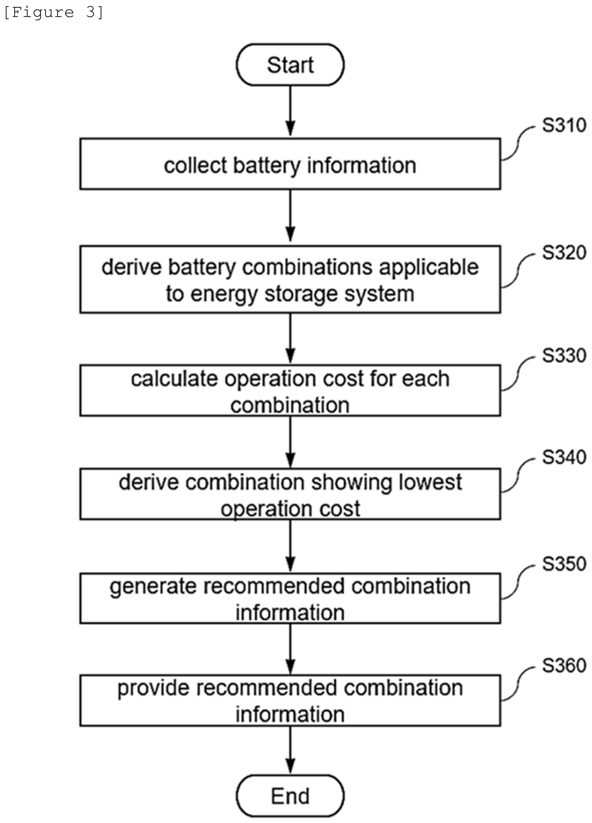

FIG. 3 is a flowchart of an operation control method of an energy storage system according to embodiments of the present invention.

The operation control method of an energy storage system according to embodiments of the present invention may be performed by an operation control apparatus which operates in connection with an energy storage system.

The operation control apparatus may collect information on a battery which is applicable to the energy storage system (S310). Here, the operation control apparatus may receive battery information from one or more of a storage device, an external storage device connected by a manager, and a user terminal.

The battery information may include one or more of a model name, a capacity, a threshold SOC range, and a purchase cost for each of one or more batteries.

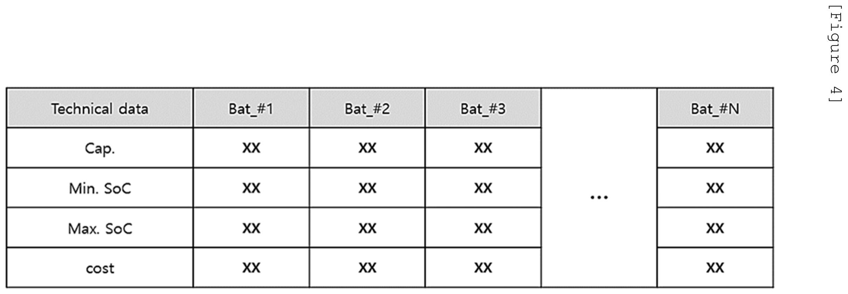

FIG. 4 is a reference table for explaining battery information according to embodiments of the present invention.

Referring to FIG. 4, the operation control apparatus may collect a battery list including a model name (or identifier), a capacity, a SOC lower limit, a SOC upper limit, and a purchase cost for each of a plurality of batteries applicable to the energy storage system.

The operation control apparatus may receive model information of an ESS battery from the energy storage system or a user terminal, and determine a battery applicable to the energy storage system based on the received model information.

Referring back to FIG. 3, the operation control apparatus may derive a plurality of battery combinations applicable to the energy storage system based on the structure of the energy storage system (S320). Here, each battery combination may include one or more batteries applicable to the energy storage system.

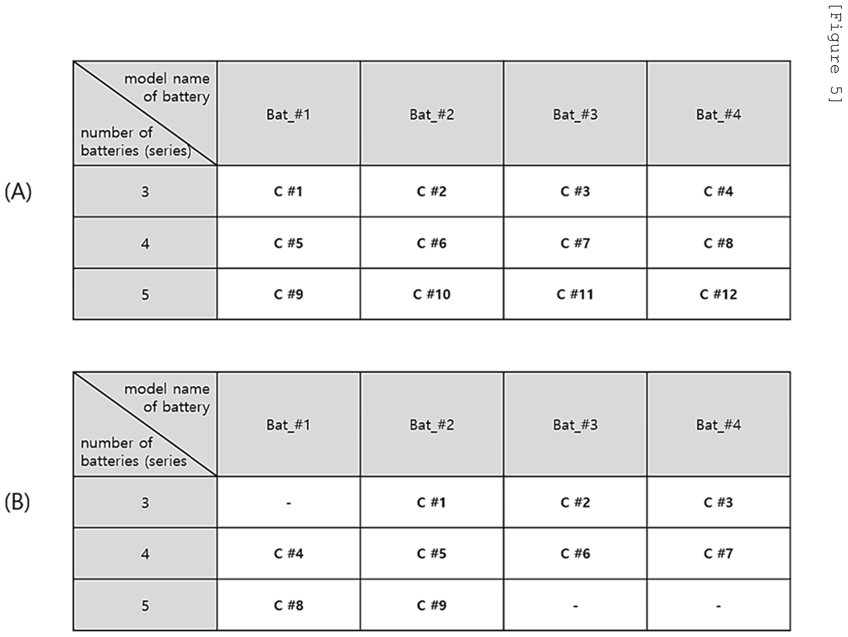

FIG. 5 is a reference table for explaining a method for deriving battery combinations according to embodiments of the present invention.

For example, in terms of the design structure of an energy storage system, if 3 or more but equal to or less than 5 series-connected batteries can be connected to an inverter, and 4 battery models (Bat#1 to #4) applicable to the energy storage system are confirmed, the operation control apparatus may derive a total of 12 battery combinations (C #1 to #12), as shown in FIG. 5(A). The 15 combinations derived from the above example are [Bat#1, series connection, 3], [Bat#2, series connection, 3], [Bat#3, series connection, 3], [Bat#4, series connection, 3], [Bat#1, series connection, 4], [Bat#2, series connection, 4], [Bat#3, series connection, 4], [Bat#4, series connection, 4], [Bat#1, series connection, 5], [Bat#2, series connection, 5], [Bat#3, series connection, 5], [Bat#4, series connection, 5], as shown in FIG. 5(A).

In embodiments, the operation control apparatus may derive multiple battery combinations that can be applied to the energy storage system based on the capacity of the battery and the limit capacity of the inverter. For example, the operation control apparatus may derive multiple battery combinations such that the total capacity by the combination of batteries exceeds the minimum guaranteed capacity of the energy storage system and is less than the limit capacity according to the limit output of the inverter.

For example, in terms of the design structure of an energy storage system, if 3 or more but equal to or less than 5 series-connected batteries can be connected to the inverter, and respective capacities of the battery models (Bat#1 to #4) applicable to the energy storage system are confirmed to be 3 kWh, 3.5 kWh, 4 kWh, and 4.5 kWh, and the minimum guaranteed capacity of the energy storage system is 10 kWh and the limit capacity of the inverter is 18 kWh, the operation control apparatus may derive a total of 9 (C #1 to #9) battery combinations as illustrated in FIG. 5(B). The nine combinations derived from the above example are, as shown in Fig. 5(B), [Bat#2, series connection, 3], [Bat#3, series connection, 3], [Bat#4, series connection, 3], [Bat#1, series connection, 4], [Bat#2, series connection, 4], [Bat#3, series connection, 4], [Bat#4, series connection, 4], [Bat#1, series connection, 5], [Bat#2, series connection, 5].

Referring back to Fig. 3, the operation control apparatus may calculate the operation cost of the energy storage system for each of the battery combinations derived in S320 (S330). Here, the operation cost of the energy storage system may be calculated based on a grid power purchase cost and a battery purchase cost.

Thereafter, the operation control apparatus may derive a battery combination that shows the lowest operation cost among the battery combinations (S340) and determine the combination as the optimal battery combination.

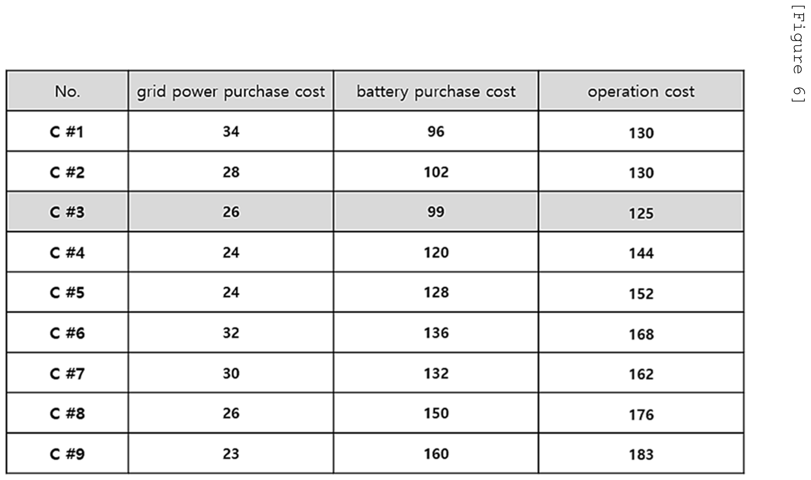

FIG. 6 is a reference table for explaining a method of deriving an optimal combination according to embodiments of the present invention.

Referring to FIG. 6, the operation control apparatus may calculate the grid power purchase cost and the battery and inverter purchase cost for each of the nine battery combinations (C #1 to #9) derived in FIG. 5(B). Thereafter, the operation control apparatus may calculate the total operation cost for each of the battery combinations by adding the grid power purchase cost and the battery purchase cost. Here, the operation control apparatus may determine [Bat#4, series connection, 3] (C #3) showing the lowest total operation cost among the nine combinations as the optimal battery combination.

In an embodiment, the operation cost of the energy storage system may be calculated as the sum ($C\_t = C\_p + C\_b$) of the grid power purchase cost ($C\_p$) and the battery inverter purchase cost ($C\_b$), as shown in FIG. 6.

In another embodiment, the operation cost of the energy storage system may be calculated as the sum ($C\_t = a*C\_p + b*C\_b$) of a value derived by reflecting a predefined weighting factor (a) on the grid power purchase cost ($C\_p$) and a value derived by reflecting a predefined weighting factor (b) on the battery purchase cost ($C\_b$).

In another embodiment, the operation cost of the energy storage system may be calculated as ($C\_t = a*C\_p * b*C\_b$), the product of a value derived by reflecting a predefined weighting factor (a) on the grid power purchase cost ($C\_p$) and a value derived by reflecting a predefined weighting factor (b) on the battery purchase cost ($C\_b$).

In other words, the operation cost of the energy storage system may be calculated in various ways as needed.

Referring back to FIG. 3, in S330, the operation control apparatus may calculate the grid power purchase cost for each of the battery combinations derived in S320 for a predetermined time period based on past history information about one or more of the energy storage system, the load, and the power generation device, and the charge/discharge schedule information of the bidirectional EV charger.

The operation control apparatus may receive past history information for a predetermined period from one or more of the user terminal, the energy management system (EMS), the inverter of the ESS, and the PV inverter. Here, the past history information may include one or more of power consumption status information of the load (e.g., power consumption per unit time), power production status information of the power generation device (e.g., power production per unit time), and charge/discharge schedule information of the ESS battery (e.g., charge/discharge per unit time).

In addition, the operation control apparatus may receive the charge/discharge schedule information (or charge/discharge plan information) of the bidirectional EV charger from the user terminal. Here, the information on charge/discharge schedule of the EV charger may include information, which is determined by a user, about a time period when the EV is connected to the EV charger and a charge/discharge plan for each time period. For example, the operation control apparatus may receive EV charge/discharge schedule information including [17:00 ~ 19:00 discharge, 21:00 ~ 24:00 charge] from the user terminal.

The operation control apparatus may perform a simulation using the past history information and EV charge/-discharge schedules for energy storage systems to which batteries are applied according to each combination (C #1 ~ #9). Thereafter, the operation control apparatus may calculate the grid power purchase cost for a preset period (e.g., one month) for each combination based on the grid power usage per unit time and the grid power cost information per unit time derived from the simulation results.

In embodiments, the operation control apparatus may derive an operation schedule (charge/discharge amount per unit time) of a battery that minimizes the purchase cost of grid power based on past history information about loads and power generation devices and EV charge/discharge schedule information, and calculate the grid power purchase cost using the derived operation schedule.

Specifically, the operation control apparatus may collect information on the power production status and power consumption status for a certain past period (e.g., for the past 1 year) and receive EV charging/discharging schedule information from the user terminal. Thereafter, the operation control apparatus may derive an operation schedule for a certain period (e.g., 1 day) that minimizes the purchase cost of grid power by using an objective function representing the purchase cost of grid power.

The operation control apparatus may derive an operation schedule by using an objective function defined based on Mixed-integer Linear Programming (MILP). Hereinafter, a specific implementation example regarding such an operation schedule generation method will be described in detail.

The operation control apparatus may derive an operation schedule including the charge/discharge amount of the battery for each time interval by using an objective function defined with the purchase cost of grid power. Here, the objective function may be defined as in the following equation 1.

[Equation 1]

$$\text{Minimize}\left(\sum_{t=1}^{t=24} P_{grid}(t) * \lambda_{grid}(t)\right)$$

(Here, $P_{grid}(t)$ is a grid power schedule, and $\lambda_{grit}(t)$ is a grid power cost.)

Equation 1 is an objective function for deriving the battery charge amount or battery discharge amount for each time period that may minimize the grid power purchase cost. Here, the objective function according to Equation 1 may be defined alongside one or more constraints which includes at least one of: a first condition regarding balance of power supply and power consumption; a second condition regarding state of charge (SOC) according to charge/discharging efficiency of an ESS battery; a third condition regarding a charge amount limit of the ESS battery; a fourth condition regarding an output limit of an inverter; a fifth condition regarding binarization of charge/discharge state of the ESS battery; a sixth condition regarding state of charge (SOC) according to charge/discharging efficiency of an EV battery; a seventh condition regarding a charge amount limit of the EV battery; an eighth condition regarding output limit of a bidirectional EV charger; and a ninth condition regarding binarization of the charge/discharge state of the bidirectional EV charger.

[Equation 2]

$$P_{grid}(t) + P_{PV}(t) - P_{Bat_{ch}}(t) + P_{Bat_{dch}}(t) - P_{EV_{ch}}(t) + P_{EV_{dch}}(t) = P_{load}(t)$$

(Here, $P_{PV}(t)$ is power generation amount of PV, $P_{Bat_{ch}}(t)$ is charging power of ESS battery, $P_{Bat_{dch}}(t)$ is discharging power of ESS battery, $P_{EV_{ch}}(t)$ is charging power of EV battery, $P_{EV_{dch}}(t)$ is discharging power of EV battery, and $P_{load(t)}$ is consumption power)

[Equation 3]

$$SOC(t+1) = SOC(t) + \frac{\eta_{ch} * P_{Bat\,ch}(t) - \frac{1}{\eta_{dch}} * P_{Bat\,dch}(t)}{E_{cap}} * t_{step}$$

(Here, SOC(t) is the SOC of ESS battery, $E_{cap}$ is the capacity of ESS battery, $\eta_{ch}$ is the charging efficiency of inverter, $\eta_{dch}$ is the discharging efficiency of inverter, $t_{step}$ is the time interval)

[Equation 4]

$$SOC_{min} \leq SOC(t) \leq SOC_{max}$$

(Here, $SOC_{min}$ is the lower limit of SOC of ESS battery, $SOC_{max}$ is the upper limit of SOC of ESS battery)

[Equation 5]

$$P_{Bat\,ch}(t) - \mu_{ch}(t) * P_{Inv\_max} \leq 0$$

(Here, $\mu_{ch}$ is battery state for charging with a value of 0 or 1, $P_{inv\_max}$ is the maximum output of the inverter)

[Equation 6]

$$P_{Bat\,dch}(t) - \mu_{dch}(t) * P_{Inv\_max} \leq 0$$

(Here, $\mu_{dch}$ is battery state for discharging with a value of 0 or 1)

[Equation 7]

$$\mu_{ch}(t) + \mu_{dch}(t) \leq 1$$

[Equation 8]

$$SOC_{EV}(t+1) = SOC_{EV}(t) + \frac{\eta_{ch\_EV} * P_{EV\,ch}(t) - \frac{1}{\eta_{dch\_EV}} * P_{EV\,dch}(t)}{E_{cap\_EV}} * t_{step}$$

(Here, $SOC_{EV}(t)$ is the SOC of the EV battery, $E_{cap\_EV}$ is the capacity of the EV battery, $q_{ch\_EV}$ is the charging efficiency of the bidirectional EV charger, $n_{dch\_EV}$ is the discharging efficiency of the bidirectional EV charger, $t_{step}$ is a time period)

[Equation 9]

$$SOC_{EVmin} \leq SOC(t) \leq SOC_{EVmax}$$

(Here, $SOC_{Evmin}$ is the lower limit of the SOC of the EV battery, $SOC_{Evmax}$ is the upper limit of the SOC of the EV battery)

[Equation 10]

$$P_{EV_{ch}}(t) - \beta_{EV} * \mu_{EVch}(t) * P_{EV\_max} \leq 0$$

(Here, $\beta_{EV}$ is an EV access state value with a value of 0 or 1, $\mu_{EVch}$ is battery state for charging with a value of 0 or 1, and $P_{EV\_max}$ is the maximum output of bidirectional EV charger)

[Equation 11]

$$P_{EV_{dch}}(t) - \beta_{EV} * \mu_{EVdch}(t) * P_{EV\_max} \leq 0$$

(Here, $\mu_{EVdch}$ is battery state for discharging having a value of 0 or 1)

[Equation 12]

$$\mu_{EVch}(t) + \mu_{EVdch}(t) \leq 1$$

The first condition may be implemented by Equation 2, and operate to ensure that the decision variables Pgrid(t), $P_{Bat_{ch}}$(t), and $P_{Bat_{dch}}$(t) are determined in accordance with the balance of power supply and demand. Meanwhile, in Equation 2, the power production amount per unit time and the power consumption amount per unit time according to past history information may be applied for $P_{PV}$(t) and $P_{load}$(t) .

The second condition may be implemented by Equation 3, and operate to ensure that the SOC of the ESS battery in the next time period is determined based on the capacity of the ESS battery and the charge/discharging efficiency of the power conversion device.

The third condition may be implemented by Equation 4, and operate to ensure that the SOC of the ESS battery is determined within a determined threshold range.

The fourth and fifth conditions may be implemented by Equations 5 to 7, and function to prevent the decision variables $P_{Bat_{ch}}$(t) and $P_{Bat_{dch}}$(t) from exceeding the output limit of the power conversion device (e.g., inverter), and to prevent the charging power and the discharging power from being determined simultaneously.

The sixth condition may be implemented by Equation 8, and operate to ensure that the SOC of the EV battery in the next time period is determined based on the capacity of the EV battery and the charging/discharging efficiency of the bidirectional EV charger.

The seventh condition may be implemented by Equation 9, and operate to ensure that the SOC of the EV battery is determined within a determined threshold range. Here, at least one of the SOC lower limit and the SOC upper limit of the EV battery may be set by a user. For example, the SOC lower limit of the EV battery may be defined as the minimum guaranteed SOC of the EV battery received from a user terminal. According to the operation schedule derived through the objective function reflecting the seventh condition, the EV battery may perform the charging/discharging operation in a state equal to or higher than the minimum guaranteed SOC.

The 8th and 9th conditions may be implemented by Equations 10 to 12, and function to prevent $P_{Bat_{ch}}$(t) and $P_{Bat_{dch}}$(t) from exceeding the output limit of the bidirectional EV charger and to prevent the charging power and the discharging power from being determined simultaneously.

The EV access state value $\beta_{EV}$ reflected in Equations 10 and 11 may be defined as [1] in the case of an access state and be defined as [0] in the case of a non-connected state. Here, the EV access state value may be defined based on EV charging/discharging schedule information received from a user terminal.

The operation control apparatus may derive $P_{Bat_{ch}}$(t) and $P_{Bat_{dch}}$(t) satisfying the objective function and constraints and generate an operation schedule including the same.

The operation control apparatus may perform a simulation using the past history information on power consumption and power production and the generated operation schedule for the energy storage systems to which the batteries according to each combination (C #1 to #9) are applied. Afterwards, the operation control apparatus may calculate the grid power purchase cost for a predetermined period (e.g., one month) for each combination based on the grid power usage per unit time and the grid power cost information per unit time derived from the simulation results.

When the optimal battery combination indicating the minimum operation cost is determined in S340, the operation control apparatus may generate recommended combination information including information on the optimal combination (S350). Here, the recommended combination information may include at least one of a model name of a battery, capacity of a battery, a number of batteries, and connection structure of the batteries applied to the energy storage system. For example, the recommended combination information may be implemented as [Bat 9158, 4kWh, 3, serial connection].

The operation control apparatus may provide the recommended combination information generated in S350 to a user terminal (S360). Here, the user terminal may output the received recommended combination information through a predefined GUI.

In the embodiments, the operation control apparatus may provide an optimal operation schedule corresponding to the optimal combination to a user terminal, an EMS, or an inverter. Here, the optimal operation schedule may correspond to an operation schedule derived according to the objective function and constraints when calculating the grid power purchase cost of the optimal combination. In other words, the operation control apparatus may provide the optimal operation schedule corresponding to the recommended combination to the user terminal as a reference operation schedule so that the grid power purchase cost is minimized when the energy storage system is operated with the combination when the optimal battery combination is applied to the energy storage system in the future.

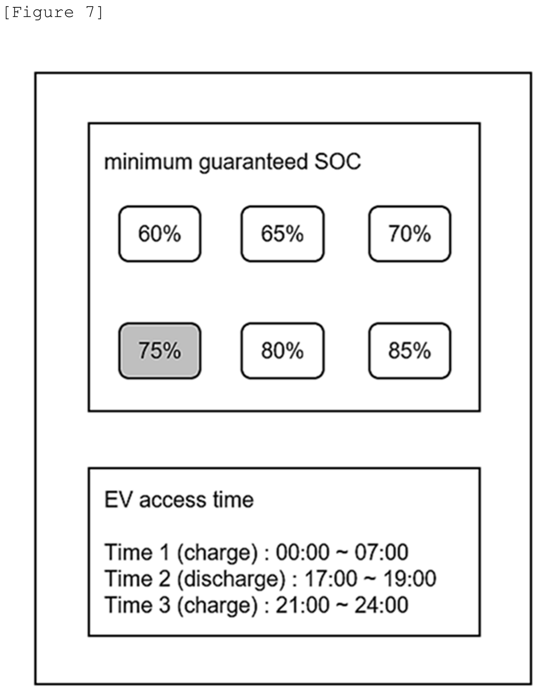

FIG. 7 is an example screen of a user terminal for explaining charge/discharge schedule information of an EV charger according to embodiments of the present invention.

The operation control apparatus may receive the minimum guaranteed SOC and EV schedule information from a user terminal, and generate an operation schedule based on the received minimum guaranteed SOC and EV charge/-discharge schedule information.

More specifically, the user terminal may receive minimum guaranteed SOC and EV schedule information for an EV battery which are input from the user through a predefined Graphical User Interface (GUI).

For example, as illustrated in FIG. 7, the user terminal may receive input of a specific SOC value (75%) as a minimum guaranteed SOC from the user, and input information about time periods during which the EV accesses to a bidirectional EV charger, and charge/discharge plans for each time period (Time 1; charge; 00:00 ~ 07:00, Time 2; discharge; 17:00 ~ 19:00, Time 3; charge; 21:00 ~ 24:00). Thereafter, the user terminal may transmit the minimum guaranteed SOC and EV charging/discharging schedule information input by the user to the operation control apparatus.

The operation control apparatus may reflect the minimum guaranteed SOC received from the user terminal in the seventh condition (Equation 9) among the constraints for deriving the operation schedule. In addition, the operation control apparatus may reflect the EV schedule information received from the user terminal in the eighth and ninth conditions (Equations 10 and 11) among the constraints for deriving the operation schedule.

The operation control apparatus may derive $P_{grid}(t)$, $P_{Bat_{ch}}(t)$ and $P_{Bat_{dch}}(t)$ that satisfy the objective function according to Equation 1 and the constraints (the first condition to the ninth condition) to which the information received from the user terminal is reflected, and generate an ESS operation schedule including $P_{Bat_{ch}}(t)$ and $P_{Bat_{dch}}(t)$.

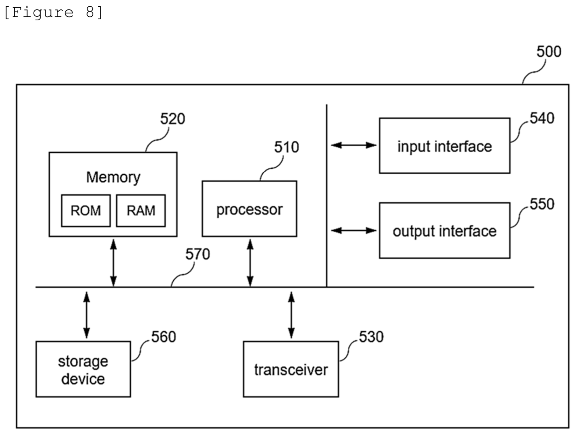

FIG. 8 is a block diagram of an operation control apparatus of an energy storage system according to embodiments of the present invention.

The operation control apparatus 500 according to embodiments of the present invention may be configured to be included within an energy storage system, or may be separately provided outside the energy storage system. For example, the operation control apparatus 500 may be implemented to be included in a Home Energy Management System (HEMS), which is a top-level control system of a residential ESS, or may be implemented to be included in a server of an ESS management company.

The operation control apparatus 500 may include at least one processor 510, a memory 520 that stores at least one instruction executed through the processor, and a transceiver 530 that is connected to a network and performs communication.

The at least one instruction may include an instruction to collect information on a battery applicable to the energy storage system; an instruction to derive a plurality of combinations composed of one or more batteries applicable to the energy storage system based on the structure of the energy storage system; an instruction to calculate an operation cost of the energy storage system for each of the combinations; and an instruction to generate information on recommended combination including information on a combination that presents the lowest operation cost among the combinations.

The instruction to collect information on the battery applicable to the energy storage system may include an instruction to collect one or more of a model name, a capacity, a threshold SOC range, and a purchase cost for each battery.

The instruction to derive a plurality of combinations may include an instruction to derive a plurality of combinations applicable to the energy storage system, based on the capacity of each battery and the design structure of the energy storage system.

The instruction to calculate the operation cost of the energy storage system may include an instruction to calculate a grid power purchase cost and a battery purchase cost for each of the combinations; and an instruction to calculate the operation cost based on the grid power purchase cost and the battery purchase cost.

The instruction to calculate the operation cost of the energy storage system may include an instruction to calculate the grid power purchase cost for each of the combinations for a predetermined period of time based on past history information about one or more of the energy storage system, a load connected to the energy storage system, and a power generation device connected to the energy storage system, and charge/discharge schedule information of a bidirectional electric vehicle (EV) charger linked to the energy storage system.

The instruction to calculate the grid power purchase cost may include an instruction to derive an operation schedule including a charge/discharge amount for each time period that minimizes the grid power purchase cost by using an objective function defined to represent the grid power purchase cost; and an instruction to calculate a grid power purchase cost for each of the combinations for a predetermined period of time by applying the operation schedule and grid power cost information to the energy storage system according to each of the combinations.

The objective function may be defined with one or more constraints which includes at least one of: a first condition regarding balance of power supply and power consumption; a second condition regarding state of charge (SOC) according to charge/discharging efficiency of an ESS battery; a third condition regarding a charge amount limit of the ESS battery; a fourth condition regarding an output limit of an inverter; a fifth condition regarding binarization of charge/discharge state of the ESS battery; a sixth condition regarding state of charge (SOC) according to charge/discharging efficiency of an EV battery; a seventh condition regarding a charge amount limit of the EV battery; an eighth condition regarding an output limit of a bidirectional EV charger; and a ninth condition regarding binarization of the charge/discharge state of the bidirectional EV charger.

The at least one instruction may further include an instruction to provide the generated recommended combination information to a user terminal linked with the energy storage system.

The recommended combination information may include one or more of a model name of the battery, a capacity of the battery, a number of batteries and a connection structure of the batteries applied to the energy storage system.

The operation control apparatus 500 according to embodiments of the present invention may further include an input interface device 540, an output interface device 550, a storage device 560, etc. Respective components included in the operation control apparatus 500 may be connected by a bus 570 and may communicate with each other.

Here, the processor 510 may mean a central processing unit (CPU), a graphics processing unit (GPU), or a dedicated processor on which methods according to embodiments of the present invention are performed. The memory (or storage unit) may include at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a networkconnected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

**Claims**

1. An apparatus for controlling operation of an energy storage system, comprising:

   at least one processor; and
   a memory configured to store at least one instruction executed by the at least one processor,
   wherein the at least one instruction includes:

      an instruction to collect information on a battery applicable to the energy storage system;
      an instruction to derive a plurality of combinations composed of one or more batteries applicable to the energy storage system based on the structure of the energy storage system;
      an instruction to calculate an operation cost of the energy storage system for each of the combinations; and
      an instruction to generate information on recommended combination including information on a combination that presents the lowest operation cost among the combinations.

2. The apparatus of claim 1, wherein the instruction to collect information on the battery applicable to the energy storage system includes:

an instruction to collect one or more of a model name, a capacity, a threshold SOC range, and a purchase cost for each battery.

3. The apparatus of claim 1, wherein the instruction to derive a plurality of combinations includes:
an instruction to derive a plurality of combinations applicable to the energy storage system, based on the capacity of each battery and the design structure of the energy storage system.

4. The apparatus of claim 1, wherein the instruction to calculate the operation cost of the energy storage system includes:

an instruction to calculate a grid power purchase cost and a battery purchase cost for each of the combinations; and
an instruction to calculate the operation cost based on the grid power purchase cost and the battery purchase cost.

5. The apparatus of claim 4, wherein the instruction to calculate the operation cost of the energy storage system includes:
an instruction to calculate the grid power purchase cost for each of the combinations for a predetermined period of time based on past history information about one or more of the energy storage system, a load connected to the energy storage system, and a power generation device connected to the energy storage system, and charge/discharge schedule information of a bidirectional electric vehicle charger linked to the energy storage system.

6. The apparatus of claim 5, wherein the instruction to calculate the grid power purchase cost includes:

an instruction to derive an operation schedule including a charge/discharge amount for each time period that minimizes the grid power purchase cost by using an objective function defined to represent the grid power purchase cost; and
an instruction to calculate a grid power purchase cost for each of the combinations for a predetermined period of time by applying the operation schedule and grid power cost information to the energy storage system according to each of the combinations.

7. The apparatus of claim 6, wherein the objective function is defined with one or more constraints which includes at least one of:

a first condition regarding balance of power supply and power consumption;
a second condition regarding state of charge according to charge/discharging efficiency of an energy storage system battery;
a third condition regarding a charge amount limit of the energy storage system battery;
a fourth condition regarding an output limit of an inverter;
a fifth condition regarding binarization of charge/discharge state of the energy storage system battery;
a sixth condition regarding state of charge according to charge/discharging efficiency of an electric vehicle battery;
a seventh condition regarding a charge amount limit of the electric vehicle battery;
an eighth condition regarding an output limit of a bidirectional electric vehicle charger; and
a ninth condition regarding binarization of the charge/discharge state of the bidirectional electric vehicle charger.

8. The apparatus of claim 1, wherein the at least one instruction further includes:
an instruction to provide the generated recommended combination information to a user terminal linked with the energy storage system.

9. The apparatus of claim 8, wherein the recommended combination information includes:
one or more of a model name of the battery, a capacity of the battery, a number of batteries and a connection structure of the batteries applied to the energy storage system.

10. A method of controlling operation of an energy storage system, the method comprising:

collecting information on a battery applicable to the energy storage system;
deriving a plurality of combinations composed of one or more batteries applicable to the energy storage system based on the structure of the energy storage system;
calculating an operation cost of the energy storage system for each of the combinations; and

generating information on recommended combination including information on a combination that presents the lowest operation cost among the combinations.

11. The method of claim 10, wherein the collecting information on a battery applicable to the energy storage system includes:
collecting one or more of a model name, a capacity, a threshold SOC range, and a purchase cost for each battery.

12. The method of claim 10, wherein the deriving the plurality of combinations includes:
deriving a plurality of combinations applicable to the energy storage system, based on the capacity of each battery and the design structure of the energy storage system.

13. The method of claim 10, wherein the calculating the operation cost of the energy storage system includes:

calculating a grid power purchase cost and a battery purchase cost for each of the combinations; and
calculating the operation cost based on the grid power purchase cost and the battery purchase cost.

14. The method of claim 13, wherein the calculating the operation cost of the energy storage system includes:
calculating the grid power purchase cost for each of the combinations for a predetermined period of time based on past history information about one or more of the energy storage system, a load connected to the energy storage system, and a power generation device connected to the energy storage system, and charge/discharge schedule information of a bidirectional electric vehicle charger linked to the energy storage system.

15. The method of claim 14, wherein the calculating the grid power purchase cost includes:

deriving an operation schedule including a charge/discharge amount for each time period that minimizes the grid power purchase cost by using an objective function defined to represent the grid power purchase cost; and
calculating a grid power purchase cost for each of the combinations for a predetermined period of time by applying the operation schedule and grid power cost information to the energy storage system according to each of the combinations.

16. The method of claim 15, wherein the objective function is defined with one or more constraints which includes at least one of:

a first condition regarding balance of power supply and power consumption;
a second condition regarding state of charge according to charge/discharging efficiency of an energy storage system battery;
a third condition regarding a charge amount limit of the energy storage system battery;
a fourth condition regarding an output limit of an inverter;
a fifth condition regarding binarization of charge/discharge state of the energy storage system battery;
a sixth condition regarding state of charge according to charge/discharging efficiency of an EV battery;
a seventh condition regarding a charge amount limit of the electric vehicle battery;
an eighth condition regarding an output limit of a bidirectional electric vehicle charger; and
a ninth condition regarding binarization of the charge/discharge state of the bidirectional electric vehicle charger.

17. The method of claim 10, further comprising:
providing the generated recommended combination information to a user terminal linked with the energy storage system.

18. The method of claim 17, wherein the recommended combination information includes:
one or more of a model name of the battery, a capacity of the battery, a number of batteries and a connection structure of the batteries applied to the energy storage system.

[Figure 1]

[Figure 2]

[Figure 3]

[Figure 4]

| Technical data | Bat_#1 | Bat_#2 | Bat_#3 | | Bat_#N |
|---|---|---|---|---|---|
| Cap. | XX | XX | XX | | XX |
| Min. SoC | XX | XX | XX | ... | XX |
| Max. SoC | XX | XX | XX | | XX |
| cost | XX | XX | XX | | XX |

[Figure 5]

(A)

| model name of battery / number of batteries (series) | Bat_#1 | Bat_#2 | Bat_#3 | Bat_#4 |
|---|---|---|---|---|
| 3 | C #1 | C #2 | C #3 | C #4 |
| 4 | C #5 | C #6 | C #7 | C #8 |
| 5 | C #9 | C #10 | C #11 | C #12 |

(B)

| model name of battery / number of batteries (series) | Bat_#1 | Bat_#2 | Bat_#3 | Bat_#4 |
|---|---|---|---|---|
| 3 | - | C #1 | C #2 | C #3 |
| 4 | C #4 | C #5 | C #6 | C #7 |
| 5 | C #8 | C #9 | - | - |

[Figure 6]

| No. | grid power purchase cost | battery purchase cost | operation cost |
|---|---|---|---|
| C #1 | 34 | 96 | 130 |
| C #2 | 28 | 102 | 130 |
| C #3 | 26 | 99 | 125 |
| C #4 | 24 | 120 | 144 |
| C #5 | 24 | 128 | 152 |
| C #6 | 32 | 136 | 168 |
| C #7 | 30 | 132 | 162 |
| C #8 | 26 | 150 | 176 |
| C #9 | 23 | 160 | 183 |

[Figure 7]

minimum guaranteed SOC

| 60% | 65% | 70% |
| 75% | 80% | 85% |

EV access time

Time 1 (charge) : 00:00 ~ 07:00
Time 2 (discharge) : 17:00 ~ 19:00
Time 3 (charge) : 21:00 ~ 24:00

[Figure 8]

## INTERNATIONAL SEARCH REPORT

| | International application No. |
|---|---|
| | **PCT/KR2025/099273** |

| **A.** | **CLASSIFICATION OF SUBJECT MATTER** |
|---|---|

**H02J 3/32**(2006.01)i; **H02J 7/00**(2006.01)i; **G06Q 50/06**(2012.01)i

According to International Patent Classification (IPC) or to both national classification and IPC

| **B.** | **FIELDS SEARCHED** |
|---|---|

Minimum documentation searched (classification system followed by classification symbols)

H02J 3/32(2006.01); B60L 11/18(2006.01); E02F 9/20(2006.01); G05B 17/02(2006.01); G05B 19/042(2006.01); G06Q 50/06(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 에너지 저장 시스템(energy storage system), 배터리(battery), 조합 (combination), 운영 비용(operating cost), 추천(recommendation)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | US 9056556 B1 (ELWHA LLC) 16 June 2015 (2015-06-16)<br>See columns 7-34; and figures 5-19. | 1-18 |
| A | KR 10-1904902 B1 (SHIN, Dong Jun) 12 October 2018 (2018-10-12)<br>See claim 1. | 1-18 |
| A | KR 10-2019-0071888 A (KOREA CONSTRUCTION EQUIPMENT TECHNOLOGY INSTITUTE) 25 June 2019 (2019-06-25)<br>See claims 1 and 3. | 1-18 |
| A | US 2020-0089178 A1 (CON EDISON BATTERY STORAGE, LLC) 19 March 2020 (2020-03-19)<br>See claim 21. | 1-18 |
| PX | KR 10-2025-0012238 A (LG ENERGY SOLUTION, LTD.) 24 January 2025 (2025-01-24)<br>See paragraphs [0043]-[0132]; claims 1-18; and figures 2-3. | 1-18 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 May 2025** | **28 May 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/099273**

| Patent document cited in search report | | | Publication date (day/month/year) | Patent family member(s) | | | Publication date (day/month/year) |
|---|---|---|---|---|---|---|---|
| US | 9056556 | B1 | 16 June 2015 | None | | | |
| KR | 10-1904902 | B1 | 12 October 2018 | None | | | |
| KR | 10-2019-0071888 | A | 25 June 2019 | None | | | |
| US | 2020-0089178 | A1 | 19 March 2020 | US | 10423138 | B2 | 24 September 2019 |
| | | | | US | 11137731 | B2 | 05 October 2021 |
| | | | | US | 11681264 | B2 | 20 June 2023 |
| | | | | US | 12181848 | B2 | 31 December 2024 |
| | | | | US | 2018-0254632 | A1 | 06 September 2018 |
| | | | | US | 2022-0100158 | A1 | 31 March 2022 |
| | | | | US | 2024-0053715 | A1 | 15 February 2024 |
| KR | 10-2025-0012238 | A | 24 January 2025 | WO | 2025-018752 | A1 | 23 January 2025 |

Form PCT/ISA/210 (patent family annex) (July 2022)

**EP 4 712 292 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240046636
- KR 101380530